# EUROPEAN PATENT APPLICATION

(11) **EP 3 734 395 A1**
(43) Date of publication of application: **04.11.2020**
(21) Application number: 17936206.6
(22) Date of filing: 27.12.2017
(51) Int. Cl.: G05D 3/12

(54) **METHOD FOR SWITCHING OPERATING MODE OF GIMBAL, AND CONTROLLER AND IMAGE STABILITY AUGMENTATION DEVICE**

(71) Applicant: SZ DJI Technology Co., Ltd., Shenzhen, Guangdong 518057 (CN)
(72) Inventor: LIU, Shuai, Shenzhen, Guangdong 518057 (CN); SU, Tie, Shenzhen, Guangdong 518057 (CN)
(74) Representative: Goddar, Heinz J.
(86) International application number: PCT/CN2017/119113
(87) International publication number: WO 2019/127137

(57) **Abstract**

A method for switching operation mode of a gimbal, a controller and an image stabilization device. The method includes determining that a gimbal needs to be switched from a first operation mode to a second operation mode; acquiring a measured attitude of the gimbal and determining a desired attitude of the gimbal according to the measured attitude; and controlling the gimbal to switch from the first operation mode to the second operation mode while maintaining the desired attitude. In this way, a camera device mounted at the gimbal can be prevented from rotating while the operation mode of the gimbal is switched, so that transition between different photographing states of the gimbal can be realized and continuous-shot photography can be achieved.

## Description

### COPYRIGHT NOTICE

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### TECHNICAL FIELD

The present disclosure relates to an aircraft field, and more particularly, to a method for switching operation mode of gimbal, and controller and image stabilization device.

### BACKGROUND

With the development of flight technology, aircrafts, e.g., Unmanned Aerial Vehicles (UAVs), also known as drones, have developed from military to more and more civilian. For example, UAV plant protection, UAV aerial photography, UAV forest fire monitoring, etc. Civilization is also the future development trend of UAV. Specifically, an aerial photography usually requires an aircraft to be equipped with a gimbal based on a three-axis gimbal technology, and a camera is mounted at the gimbal. The three-axis gimbal technology is a technology that realizes automatic and stable coordination by controlling the pitch angle, yaw angle, and roll angle.

A handheld gimbal is an important development direction in the field of image stabilization. The handheld gimbal transfers the three-axis gimbal technology to the field of handheld shooting, which can realize automatic stable balance during shooting. The camera is clamped on the handheld gimbal, and the handheld gimbal can automatically adjust with actions of a user, and always keep the camera at a stable and balanced angle to make the captured picture as stable as possible.

In order to meet the increasing demand for shooting, the existing gimbal can be equipped with a camera for shooting in the sky, equipped with a camera and mounted at a car for shooting, and equipped with a camera for handheld shooting. In order to achieve the above described shooting requirements, a gimbal can have a plurality of operation modes, e.g., a lock mode, that is, the mode where the orientation of the gimbal remains the same regardless of how the base moves during shooting; a follow mode, that is, the gimbal tracks the base to move during shooting; a recenter mode, that is, the yaw direction of the gimbal is aligned with the base and the pitch direction of the gimbal returns to horizontal. When the existing gimbal is switched in these operation modes, the picture captured by the camera mounted at the gimbal shows the problems such as interruption, vibration, or freeze, etc.

### SUMMARY

The present disclosure provides a method for switching the operation mode of a gimbal, a controller and an image stabilization device, which can avoid the problems of vibration or freeze in the picture captured by the camera mounted at the gimbal when switching the operation mode of the gimbal.
In a first aspect, an embodiment of the present disclosure provides a method for switching the operation mode of a gimbal including, determining that a gimbal needs to be switched from a first operation mode to a second operation mode; acquiring the measured attitude of the gimbal and determining the desired attitude of the gimbal according to the measured attitude; and controlling the gimbal to switch from the first operation mode to the second operation mode while maintaining the desired attitude.
In a second aspect, an embodiment of the present disclosure provides a controller including a processing unit used for, determining that a gimbal needs to be switched from a first operation mode to a second operation mode; acquiring the measured attitude of the gimbal and determining the desired attitude of the gimbal according to the measured attitude; and controlling the gimbal to switch from the first operation mode to the second operation mode while maintaining the desired attitude. The controller further includes a transceiver unit for communicating with the gimbal. For example, the transceiver unit receives the attitude information sent by the gimbal, so that the processing unit can obtain the measured attitude of the gimbal based on this. As another example, the transceiver unit sends a control signal to the gimbal under the instruction of the processing unit to control the gimbal to switch from the first operation mode to the second operation mode while maintaining the desired attitude.
In a third aspect, an embodiment of the present disclosure provides a controller including a memory storing computer programs and a processor executing the computer programs to perform the following operations: determining that a gimbal needs to be switched from a first operation mode to a second operation mode; acquiring the measured attitude of the gimbal and determining the desired attitude of the gimbal according to the measured attitude; and controlling the gimbal to switch from the first operation mode to the second operation mode while maintaining the desired attitude.
In a fourth aspect, an embodiment of the present disclosure provides an image stabilization device including, a gimbal that can work in a first operation mode and a second operation mode, and the current operation mode of the gimbal is the first operation mode; a measurement component configured to acquire a measured attitude of the gimbal, and send the measured attitude to the controller; a controller for determining that the gimbal needs to be switched from the first operation mode to the second operation mode, acquiring the measured attitude of the gimbal and determining the desired attitude of the gimbal according to the measured attitude, and controlling the gimbal to switch from the first operation mode to the second operation mode while maintaining the desired attitude.
In a fifth aspect, an embodiment of the present disclosure provides a chip including a processing module and a communication interface. The processing module is used to control the communication interface to communicate with the outside, and the processing module is further configured to implement the method provided by the first aspect.
In a sixth aspect, an embodiment of the present disclosure provides a readable storage medium storing computer programs that, when executed by a computer, cause the computer to implement the method of any possible implementation methods provided by the first aspect or the second aspect. Specifically, the described computer can be any device described above.
In a seventh aspect, an embodiment of the present disclosure provides a computer program product including instructions that, when executed by a computer, cause the computer to implement the method provided by the first aspect.

The embodiments of the present disclosure control the gimbal to switch from the first operation mode to the second operation mode while maintaining the desired attitude, and hence realize seamless switching of different operation modes of the gimbal. In this way, a camera device mounted at the gimbal can be prevented from rotating while the operation mode of the gimbal is switched, so that transition between different photographing states of the gimbal can be realized and continuous-shot photography can be achieved. Therefore, the method in the embodiment of the present disclosure can solve the problems such as vibration, or freeze, etc. of the picture captured by the camera mounted at the gimbal in existing technologies when the gimbal is switched in different operation modes.

### BRIEF DESCRIPTION OF THE DRAWINGS

FIG. 1 is a schematic structural diagram of a gimbal.
FIG. 2 is a schematic diagram of the operation principle of a gimbal.
FIG. 3 is a schematic flowchart of a method for switching the operation mode of a gimbal according to one embodiment of the present disclosure.
FIG. 4, FIG. 5 and FIG. 6 are schematic diagrams showing switching of a gimbal from a lock mode to a follow mode according to one embodiment of the present disclosure.
FIG. 7 is a schematic block diagram of a controller according to one embodiment of the present disclosure.
FIG. 8 is another schematic block diagram of a controller according to one embodiment of the present disclosure.
FIG. 9 is a schematic block diagram of an image stabilization device according to one embodiment of the present disclosure.

### DETAILED DESCRIPTION OF THE EMBODIMENTS

Technical solutions of the present disclosure will be described with reference to the drawings.

Unless defined otherwise, all technical and scientific terms used herein have the same meaning as commonly understood by one of ordinary skill in the art to which is application belongs. The terms used herein in the specification of the present disclosure are only for the purpose of describing specific embodiments, and are not intended to limit the present disclosure.

Related technologies and terms involved in the embodiments of the present disclosure are described below.

A lock mode of a gimbal refers to that during the shooting, the yaw angle of the gimbal does not change with the movement of the base. It is usually used in aerial or car photography scenarios.

A follow mode of a gimbal refers to that during the shooting, the gimbal follows the movement of the base, and the yaw angle of the gimbal changes with the rotation of the base. It is usually used in handheld photography scenarios.

A recenter mode of a gimbal refers to aligning the yaw direction of the gimbal with the yaw direction of the base, and returning the gimbal to horizontal in the pitch direction.

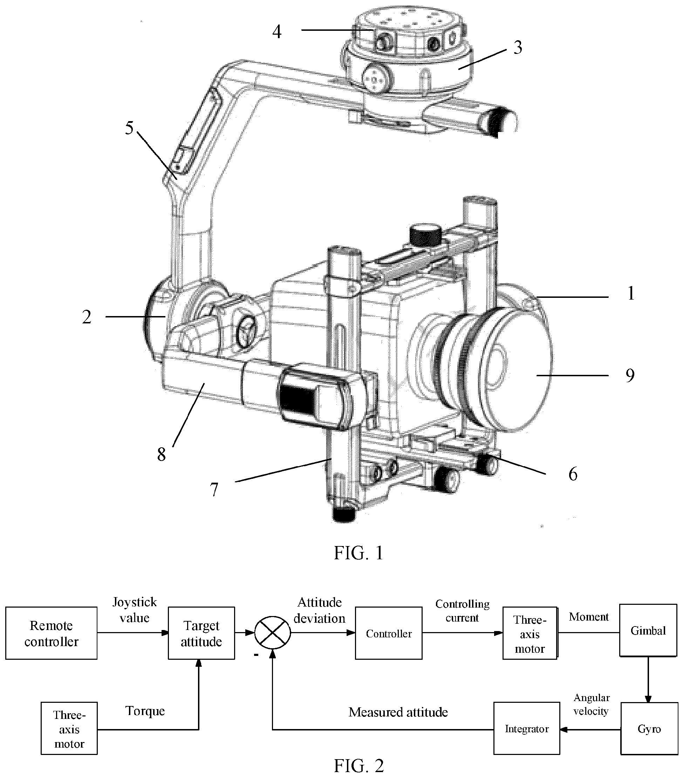

FIG. 1 is a schematic diagram of a three-axis gimbal according to one embodiment of the present disclosure. As shown in FIG. 1, the three-axis gimbal includes a three-degree-of-freedom electric turntable, which includes an inner frame 7, a middle frame 8, an outer frame 5, and a gimbal base 4. Specifically, the outer frame 5 is mounted at the gimbal base 4, the middle frame 8 is mounted at the outer frame 5, and the inner frame 7 is mounted at the middle frame 8. The rotation axis of the outer frame 5 is equipped with a yaw axis motor 3. The rotation axis of the middle frame 8 is located at the outer frame 5. The rotation axis of the middle frame 8 is equipped with a roll axis motor 2. The rotation axis of the inner frame 7 is equipped with a pitch axis motor 1. The rotation axes of the outer frame 5, the middle frame 8, and the inner frame 7 are perpendicular to each other in space, and intersect at a point.

As shown in FIG. 1, the inner frame 7 is equipped with a camera fixing component 6 that includes an inertial measurement unit such as a gyroscope. The camera 9 can be mounted at the camera fixing component 6.

The operation of the pitch axis motor 1 drives the inner frame 7 to rotate, and hence the camera 9 is shifted in the pitch direction. The inner frame 7 may also be referred to as a pitch axis arm. The operation of the roll axis motor 2 drives the middle frame 8 to rotate, and hence the camera 9 is shifted in the roll direction. The middle frame 8 may also be referred to as a roll axis arm. The operation of the yaw axis motor 3 drives the outer frame 5 to rotate, and hence the camera 9 is shifted in the yaw direction. The outer frame 5 may also be referred to as a yaw axis arm.

It should be understood that the direction or orientation of the gimbal refers to the orientation of the camera (e.g., the camera 9 in FIG. 1) mounted at the gimbal, that is, the orientation of the inner frame of the gimbal.

The term "base" in this specification refers to the gimbal base.

FIG. 2 is a schematic diagram of the operation principle of a gimbal. As shown in FIG. 2, the gimbal uses an inertial measurement unit (e.g., the inertial measurement unit located in the camera fixing component 6 shown in FIG. 1) as a feedback device, and a three-axis motor as an output element to form a closed-loop control system whose control variable is the attitude of the gimbal, that is, given a target attitude, the feedback attitude is used to achieve an infinite close measured attitude to the target.

Specifically, the operation flow of the closed-loop control system is as follows. The target attitude of the gimbal is determined through the value of the joystick output by the remote controller and the torque of the motor. The measured attitude of the gimbal is obtained by the integrator to integrate the angular speed of the gyroscope (inertial measurement unit) on the gimbal. The deviation between the target attitude and the measured attitude is input into the controller, and the controller controls the operation of the three-axis motor (e.g., the pitch axis motor, the roll axis motor 2 and the yaw axis motor 3) according to the input deviation. The operation of the three-axis motor will cause the corresponding axis arm to output torque, thereby changing the attitude of the gimbal. Through this closed-loop control, the measured attitude of the gimbal is constantly approaching the target attitude.

At present, in order to meet the shooting needs of people, the gimbal has also added many new characteristics, such as lock mode, follow mode, and recenter mode. In the lock mode, the orientation of the gimbal remains the same regardless of how the gimbal base moves. In the follow mode, the gimbal follows the gimbal base. In the recenter mode, the yaw direction of the gimbal is aligned with the gimbal base, and returns to the level in the pitch direction. It should be understood that the direction of the gimbal or the orientation of the gimbal in this specification refers to the orientation of the inner frame of the gimbal.

With the development of shooting technology, the shooting needs of users are getting higher and higher, for example, users require continuous-shot photography when shooting. The term "continuous-shot photography" refers to the fact that the picture is not interrupted during the shooting process. Whether the camera is mounted at an aircraft, or mounted at a car, or mounted at a handheld ring, an arbitrary switch can be implemented among these shooting scenes. The gimbal and the camera are always in operating status, so that the captured pictures are continuous without interruption, and there is no sudden vibration or freeze in the picture.

At present, the gimbal mainly operates in the lock mode when performing aerial photography and mainly operates in the follow mode when performing handheld photography. When a switch between these two modes is needed, the gimbal needs to search for the following center point of the gimbal base again. During this process, the orientation of the camera mounted at the gimbal rotates, causing the screen to rotate and fail to align with the scene before the mode switch, and making it impossible to achieve a continuous-shot photography, which cannot meet the shooting needs of users.

In view of the above problems, the present disclosure provides a method for switching the operation mode of a gimbal, a controller and an image stabilization device, which can avoid vibration or freeze of a picture captured by a camera mounted at the gimbal when the gimbal is switched in different operation modes.

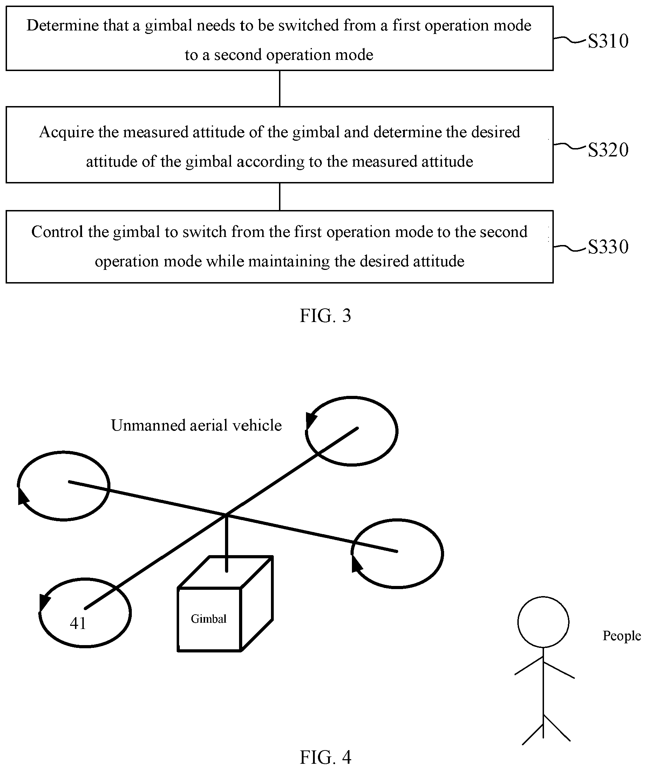

FIG. 3 is a schematic flowchart of a method for switching the operation mode of a gimbal according to one embodiment of the present disclosure. The method 300 may be executed by a controller that controls the gimbal. As shown in FIG. 3, the method 300 includes the following.

At S310, it is determined that the gimbal needs to be switched from a first operation mode to a second operation mode.

The first operation mode and the second operation mode refer to two different operation modes of the gimbal. For example, the first operation mode is a lock mode of the gimbal, and the second operation mode is a follow mode or a recenter mode. Or, the first operation mode is a follow mode of the gimbal, and the second operation mode is a lock mode or a recenter mode.

Specifically, the controller that controls the gimbal can determine whether to switch the operation mode of the gimbal adaptively, or the controller can determine whether to switch the operation mode of the gimbal according to a user instruction, which is not limited here.

At S320, the measured attitude of the gimbal is acquired and the desired attitude of the gimbal is determined according to the measured attitude.

Specifically, the measured attitude of the gimbal is acquired according to the measured data of the inertial measurement unit (e.g., the inertial measurement unit included in the camera fixing component 6 shown in FIG. 1) mounted at the gimbal. For example, the inertial measurement unit is a gyroscope, and the measured attitude of the gimbal can be obtained by integrating the angular speed of the gyroscope.

Specifically, the desired attitude of the gimbal is determined according to the measured attitude and the joystick value of the remote controller.

As an example, the gimbal is a gimbal at an unmanned aerial vehicle. The process of determining the desired attitude of the gimbal is as follows.

When the gimbal is initialized, the gimbal is aligned with the unmanned aerial vehicle. Specifically, the pitch angle of the gimbal is zero, the roll angle of the gimbal is zero, and the yaw angle of the gimbal is equal to the yaw angle of the unmanned aerial vehicle.

The angle that represents the user-defined attitude of the gimbal is then obtained by integrating the angular speed input by the joystick of the remote controller.

The desired attitude of the gimbal can be determined based on the measured attitude of the gimbal and the user-defined attitude of the gimbal.

As another example, the gimbal is a handheld gimbal. The process of determining the desired attitude of the gimbal is as follows.

When the gimbal is initialized, the gimbal is aligned with the handle. Specifically, the pitch angle of the gimbal is zero, the roll angle of the gimbal is zero, and the yaw angle of the gimbal is equal to the yaw angle of the handle.

The angle that represents the user-defined attitude of the gimbal is then obtained by integrating the angular speed input by the joystick of the remote controller.

The desired attitude of the gimbal can be determined based on the measured attitude of the gimbal and the user-defined attitude of the gimbal.

It should be understood that the joystick input of the remote controller is the result of the user controlling the remote controller. Therefore, it can be considered that the attitude of the gimbal indicated by the joystick value of the remote controller is a user-defined attitude of the gimbal.

It should also be understood that, in order to ensure that the gimbal does not rotate during the mode switching as much as possible, when the user defines the attitude of the gimbal by manipulating the remote controller, it is defined in principle with reference to the current measured attitude of the gimbal. That is, in the ideal case, the attitude of the gimbal (i.e., the user-defined attitude of the gimbal) indicated by the joystick value of the remote controller is the same as the measured attitude of the gimbal. However, in actual situations, due to various reasons, the attitude of the gimbal (i.e., the user-defined attitude of the gimbal) indicated by the joystick value of the remote controller may be inconsistent with the measured attitude of the gimbal, in which case the measured attitude of the gimbal is determined as the desired attitude of the gimbal. On the other hand, when the measured attitude of the gimbal is consistent with the user-defined attitude of the gimbal, the user-defined attitude of the gimbal can be determined as the desired attitude of the gimbal.

At S330, the gimbal is controlled to switch from the first operation mode to the second operation mode while the desired attitude is maintained.

Specifically, the gimbal is controlled to switch from the first operation mode to the second operation mode, and during the switching process, the gimbal is controlled to keep in the desired attitude. In other words, the orientation of the inner frame of the gimbal does not change during the operation mode switching of the gimbal.

The embodiments of the present disclosure control the gimbal to switch from the first operation mode to the second operation mode while maintaining the desired attitude, and hence realize seamless switching of different operation modes of the gimbal. In this way, a camera device mounted at the gimbal can be prevented from rotating while the operation mode of the gimbal is switched, so that transition between different photographing states of the gimbal can be realized and continuous-shot photography can be achieved. Therefore, the method in the embodiment of the present disclosure can solve the problems such as vibration, or freeze, etc. of the picture captured by the camera mounted at the gimbal in existing technologies when the gimbal is switched in different operation modes.

It should be noted that the seamless switching of different operation modes of the gimbal described in this specification refers to that the orientation of the inner frame of the gimbal does not change during the switching of different operation modes.

Specifically, at S310, the controller that controls the gimbal may determine that the gimbal needs to be switched from the first operation mode to the second operation mode through an adaptive judgment.

For example, if the gimbal is mounted at an unmanned aerial vehicle, at S310, the controller that controls the gimbal determines that the gimbal needs to be switched from the first operation mode to the second operation mode according to the flight control data.

Specifically, the flight control data includes flight status information such as longitude and latitude data, altitude data, or attitude data. It should be understood that the flight control data can provide position and orientation reference for aerial photography.

Optionally, as an implementation method, the gimbal is mounted at an unmanned aerial vehicle, and S310 specifically includes determining that the gimbal needs to be switched from the first operation mode to the second operation mode when the flight control data corresponds to the unmanned aerial vehicle stopping the propeller.

Specifically, when the flight control data corresponds to the flight status information of the unmanned aerial vehicle stopping the propeller, it is determined that the gimbal needs to switch the operation mode at this time.

Optionally, as another implementation method, the gimbal is mounted at an unmanned aerial vehicle, and S310 specifically includes determining that the gimbal needs to be switched from the first operation mode to the second operation mode when the unmanned aerial vehicle stops transmitting flight control data.

Specifically, when it is detected that the unmanned aerial vehicle stops transmitting flight control data, it is determined that the gimbal needs to switch the operation mode.

Specifically, at S310, the controller that controls the gimbal may also determine that the gimbal needs to be switched from the first operation mode to the second operation mode through a user instruction.

Optionally, in some embodiments, the S310 specifically includes, receiving an operation mode switching instruction; and determining that the gimbal needs to be switched from the first operation mode to the second operation mode according to the operation mode switching instruction.

As an optional implementation method, receiving an operation mode switching instruction includes receiving the operation mode switching instruction sent by a remote controller or a handle.

For example, a user sends an operation mode switching instruction through a remote controller or a handle, and the controller that controls the gimbal triggers the operation mode switching process after receiving the operation mode switching instruction, e.g., executing S320 and S330 in the above embodiment.

As another optional implementation method, receiving an operation mode switching instruction includes receiving the operation mode switching instruction sent by a terminal device through an application (APP).

For example, a user sends an operation mode switching instruction through the APP mounted at the terminal device, and the controller that controls the gimbal triggers the operation mode switching process after receiving the operation mode switching instruction, e.g., executing S320 and S330 in the above embodiment.

Specifically, at 330, the gimbal is controlled to switch from the first operation mode to the second operation mode while the desired attitude is maintained. The corresponding control command is generated in different ways with different operation modes. The following description is based on different switching scenarios.

In switching scenario 1, the gimbal is switched from the lock mode to the follow mode.

Optionally, in some embodiments, the first operation mode is the lock mode of the gimbal, and the second operation mode is the follow mode of the gimbal. S330 specifically includes controlling the gimbal to be switched from the lock mode to the follow mode while maintaining the desired attitude and not performing recenter.

In existing technologies, when the gimbal needs to be switched between the lock mode and the follow mode, the gimbal needs to search for the following center point of the gimbal base again. During this process, the orientation of the camera mounted at the gimbal rotates, causing the screen to rotate and fail to align with the scene before the mode switch, and making it impossible to achieve a continuous-shot photography, which cannot meet the shooting needs of users.

The embodiments of the present disclosure control the gimbal to switch from the lock mode to the follow mode while maintaining the desired attitude and not performing recenter, and hence realize seamless switching of the gimbal from the lock mode to the follow mode. In this way, the camera device mounted at the gimbal can be prevented from rotating while the operation mode of the gimbal is switched, so that a continuous-shot photography can be achieved and the shooting needs of users can be satisfied.

Since the gimbal is in the lock mode during shooting, the yaw direction of the gimbal does not change with the movement of the gimbal base. Therefore, in the lock mode of the gimbal, the difference between the attitude of the base and the attitude of the gimbal may change. The difference between the attitude of the base and the attitude of the gimbal may include the following three parts: the speed integral generating part, the push command part, and the pure rotation part. If the gimbal needs to be switched from the lock mode to the follow mode, in order to ensure that the gimbal does not move, the pure rotation part needs to be obtained. The angle generated by the pure rotation part of the base is equal to the yaw Euler angle of the attitude of the current middle frame of the gimbal minus the yaw Euler angle of the attitude of the current base of the gimbal, and then minus the angle generated by the speed integral part, and last minus the angle generated by the push command part.

For example, in the three-axis gimbal shown in FIG. 1, the attitude of the middle frame refers to the attitude of the middle frame 8, and the attitude of the base refers to the attitude of the gimbal base 4.

Optionally, as an implementation method, at S330, controlling the gimbal to be switched from the lock mode to the follow mode while maintaining the desired attitude and not performing recenter specifically includes S331-S333 as follows.

At S331, an angle offset value of the gimbal in the lock mode is determined according to the attitude of the middle frame corresponding to the measured attitude and the attitude of the base corresponding to the measured attitude of the gimbal.

The attitude of the middle frame corresponding to the measured attitude refers to the current attitude of the middle frame of the gimbal, and the attitude of the base corresponding to the measured attitude refers to the current attitude of the base of the gimbal.

Specifically, the method of determining the angle offset value of the gimbal in the lock mode may be determining the angle offset of the gimbal in the lock mode according to the difference between the yaw Euler angle of the attitude of the middle frame corresponding to the measured attitude and the yaw Euler angle of the attitude of the base corresponding to the measured attitude.

Optionally, in some embodiments, the method of determining the angle offset value of the gimbal in the lock mode may also be determining the angle offset of the gimbal in the lock mode according to the difference between the attitude angle of the attitude of the middle frame and the attitude angle of the attitude of the base corresponding to the measured attitude in another coordinate system. The other coordinate system can be a feasible coordinate system other than the Euler coordinate system, which is not limited in this embodiment of the present disclosure.

At S332, an angle difference in the Euler coordinate system between the attitude of the middle frame corresponding to the desired attitude and the attitude of the base corresponding to the measured attitude is determined according to the attitude of the middle frame corresponding to the desired attitude, the attitude of the base corresponding to the measured attitude, and the angle offset value.

Specifically, a switching attitude from the attitude of the middle frame corresponding to the desired attitude to the attitude of the base corresponding to the measured attitude is obtained according to the attitude of the middle frame corresponding to the desired attitude and the attitude of the base corresponding to the measured attitude. Then the angle offset value is subtracted from the switching attitude to obtain the angle difference in the Euler coordinate system between the attitude of the middle frame corresponding to the desired attitude and the attitude of the base corresponding to the measured attitude.

At S333, a follow speed is determined according to the angle difference, and the follow speed is integrated to obtain a follow command.

It should be understood that the gimbal is switched from the lock mode to the follow mode after receiving the follow command.

This embodiment can realize seamless switching of the gimbal from the lock mode to the follow mode.

Optionally, as another implementation method, at S330, controlling the gimbal to be switched from the lock mode to the follow mode while maintaining the desired attitude and not performing recenter includes S334-S336 as follows.

At S334, an angle offset value of the gimbal in the lock mode is obtained by adding the angle generated by the speed integral command part of the gimbal in the lock mode and the angle generated by the push command part to the angle of the pure rotation of the base.

At S335, an angle difference in the Euler coordinate system between the attitude of the middle frame corresponding to the desired attitude and the attitude of the base corresponding to the measured attitude is determined according to the attitude of the middle frame corresponding to the desired attitude, the attitude of the base corresponding to the measured attitude, and the angle offset value.

Specifically, a switching attitude from the attitude of the middle frame corresponding to the desired attitude to the attitude of the base corresponding to the measured attitude is obtained according to the attitude of the middle frame corresponding to the desired attitude and the attitude of the base corresponding to the measured attitude. Then the angle offset value is subtracted from the switching attitude to obtain the angle difference in the Euler coordinate system between the attitude of the middle frame corresponding to the desired attitude and the attitude of the base corresponding to the measured attitude.

At S336, a follow speed is determined according to the angle difference, and the follow speed is integrated to obtain a follow command.

It should be understood that the gimbal is switched from the lock mode to the follow mode after receiving the follow command.

This embodiment can realize seamless switching of the gimbal from the lock mode to the follow mode.

It should be understood that when the gimbal is used for aerial or car photography, it mainly operates in the lock mode and when it is used for handheld photography, it mainly operates in the follow mode. Therefore, the operation mode switching method in the switching scenario 1 described above can be applied to the application scenario of switching from the aerial photography to the handheld photography, or from the car photography to the handheld photography.

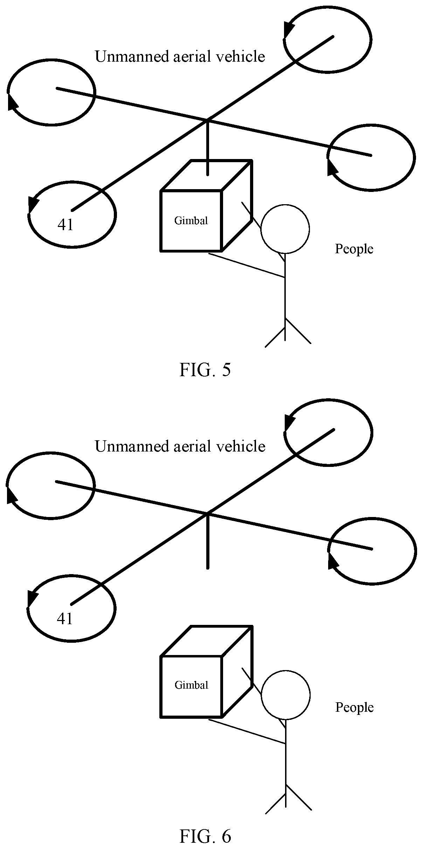

Specifically, FIG. 4, FIG. 5 and FIG. 6 are schematic diagrams showing switching of a gimbal from a lock mode to a follow mode. In FIG. 4, the gimbal operates in the aerial photography status, and its operation mode is the lock mode. In FIG. 5, the gimbal is in the process of switching the operation mode, that is, switching from the lock mode to the follow mode. In FIG. 6, the gimbal has switched to the follow mode for handheld photography. In the scenario shown in FIG. 6, the method of the embodiment of the present disclosure can be used to complete the switch of the gimbal from the lock mode to the follow mode.

This embodiment can realize seamless switching of the gimbal from the lock mode to the follow mode, and hence realize seamless switching of the gimbal from the aerial or the car photography to the handheld photography, and increase user satisfaction.

In switching scenario 2, the gimbal is switched from the follow mode to the lock mode.

Optionally, in some embodiments where the current operation mode of the gimbal is the follow mode, the method 300 can further include, determining an angle offset value of the gimbal in the lock mode according to the attitude of the middle frame and the attitude of the base corresponding to the measured attitude of the gimbal; subtracting the angle generated by the speed integral command part of the gimbal in the follow mode and the angle generated by the push command part from the angle offset value to obtain the pure rotation of the base of the gimbal in the follow mode; recording the angle of the pure rotation of the base; and generating a lock command based on the recorded angle of the pure rotation of the base when the gimbal needs to be switched to the lock mode.

It should be understood that the gimbal is switched from the follow mode to the lock mode after receiving the lock command.

It should also be understood that the switching scenario 2 can be applied to the application scenario of switching from handheld photography to aerial photography, or from handheld photography to car photography.

This embodiment can realize seamless switching of the gimbal from the follow mode to the lock mode, and hence realize seamless switching of the gimbal from the handheld photography to the aerial or the car photography, and increase user satisfaction.

In switching scenario 3, the gimbal is switched from the follow mode or or the lock mode to the recenter mode.

Optionally, in some embodiments, the first operation mode is the lock mode or the follow mode of the gimbal, and the second operation mode is the recenter mode. S330 specifically includes S337 and S338 as follows.

At S337, a recenter speed is determined according to the attitude of the base corresponding to the measured attitude and the attitude of the middle frame corresponding to the desired attitude.

Specifically, the difference between the yaw Euler angle of the attitude of the base corresponding to the measured attitude and the yaw Euler angle of the attitude of the middle frame corresponding to the desired attitude is obtained to obtain the recenter speed.

At S338, the recenter speed is integrated to get the speed integral command part, and command parts other than the speed integral command part are cleared to zero.

Specifically, in addition to the speed integral command part, other command parts include a push command part, a follow command part, and a pure rotation part of the base.

Optionally, in this embodiment, the speed integral command part causes the difference between the yaw Euler angle of the attitude of the middle frame corresponding to the desired attitude and the yaw Euler angle of the attitude of the base corresponding to the desired attitude to be within a preset range.

Specifically, during obtaining the difference between the yaw Euler angle of the attitude of the base corresponding to the measured attitude and the yaw Euler angle of the attitude of the middle frame corresponding to the desired attitude to obtain the recenter speed, the return is considered to be completed when the difference between the yea Euler angle of attitude of the based corresponding to the measured attitude and the yaw Euler angle of the attitude of the middle frame corresponding to the desired attitude is within the preset range. The current recenter speed obtained is integrated to get the speed integral command part, and the push command part, the follow command part and the pure rotation part of the base are cleared to zero.

In this embodiment, the preset range may be an empirical value.

This embodiment can realize seamless switching of the gimbal from the lock mode to the recenter mode, or from the follow mode to the recenter mode, and hence increase user satisfaction.

It should be understood that after the gimbal completes returning, the follow mode or the lock mode can be turned on. For example, after the gimbal completes returning, if it needs to enter the follow mode, the follow mode is turned on. Or, after the gimbal completes returning, if it needs to enter the lock mode, the lock mode is turned on.

The embodiments of the present disclosure control the gimbal to switch from the first operation mode to the second operation mode while maintaining the desired attitude, and hence realize seamless switching of different operation modes of the gimbal. In this way, a camera device mounted at the gimbal can be prevented from rotating while the operation mode of the gimbal is switched, so that transition between different photographing states of the gimbal can be realized and continuous-shot photography can be achieved. Therefore, the method in the embodiment of the present disclosure can solve the problems such as vibration, or freeze, etc. of the picture captured by the camera mounted at the gimbal in existing technologies when the gimbal is switched in different operation modes.

The method embodiments of the present disclosure are described above, and the device embodiments of the present disclosure are described below. It should be understood that the description of the device embodiment and the description of the method embodiment correspond to each other. Therefore, the content that is not described in detail can be referred to the above method embodiment and will not be repeated here for brevity.

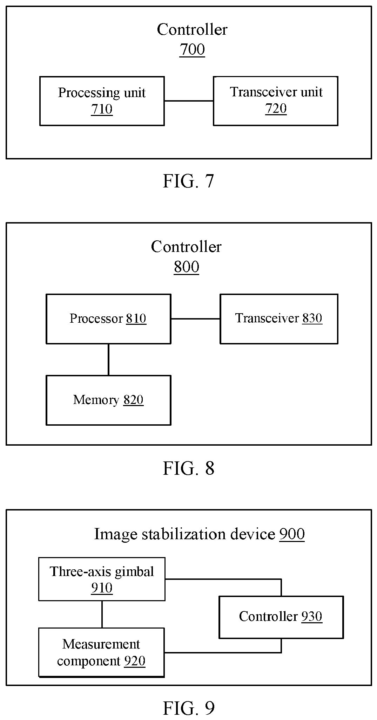

FIG. 7 is a schematic block diagram of a controller according to one embodiment of the present disclosure. The controller 700 is configured to control the gimbal. As shown in FIG. 7, the controller 700 includes a processing unit 710 used for determining that a gimbal needs to be switched from a first operation mode to a second operation mode; acquiring the measured attitude of the gimbal and determining the desired attitude of the gimbal according to the measured attitude; and controlling the gimbal to switch from the first operation mode to the second operation mode while maintaining the desired attitude.

It should be understood that the controller 700 further includes a transceiver unit 720 for communicating with the gimbal. For example, the transceiver unit 720 receives the attitude information sent by the gimbal, so that the processing unit 710 obtains the measured attitude of the gimbal based on this. For another example, the transceiver unit 720 sends a control signal to the gimbal under the instruction of the processing unit 710 to control the gimbal to switch from the first operation mode to the second operation mode while maintaining the desired attitude.

Optionally, in some embodiments, the processing unit 710 is specifically used for determining that the gimbal needs to be switched from the first operation mode to the second operation mode according to the flight control data.

Optionally, in some embodiments, the processing unit 710 is specifically used for determining that the gimbal needs to be switched from the first operation mode to the second operation mode when the flight control data corresponds to the unmanned aerial vehicle stopping the propeller.

Optionally, in some embodiments, the processing unit 710 is specifically used for determining that the gimbal needs to be switched from the first operation mode to the second operation mode when the unmanned aerial vehicle stops transmitting flight control data.

Optionally, in some embodiments, the first operation mode is the lock mode of the gimbal, and the second operation mode is the follow mode of the gimbal. The processing unit 710 is specifically used for controlling the gimbal to be switched from the lock mode to the follow mode while maintaining the desired attitude and not performing recenter.

Optionally, in some embodiments, the processing unit 710 is specifically used for determining an angle offset value of the gimbal in the lock mode according to the attitude of the middle frame and the attitude of the base corresponding to the measured attitude of the gimbal; determining an angle difference in the Euler coordinate system between the attitude of the middle frame corresponding to the desired attitude and the attitude of the base corresponding to the measured attitude according to the attitude of the middle frame corresponding to the desired attitude, the attitude of the base corresponding to the measured attitude, and the angle offset value; determining a follow speed according to the angle difference, and integrating the follow speed to obtain a follow command. The transceiver unit 720 is used to send the follow command to the gimbal.

Optionally, in some embodiments, the processing unit 710 is specifically used for determining the angle offset of the gimbal in the lock mode according to the difference between the yaw Euler angle of the attitude of the middle frame and the yaw Euler angle of the attitude of the base corresponding to the measured attitude.

Optionally, in some embodiments, the processing unit 710 is specifically used for obtaining an angle offset value of the gimbal in the lock mode by adding the angle generated by the speed integral command part of the gimbal in the lock mode and the angle generated by the push command part to the angle of the pure rotation of the base; determining an angle difference in the Euler coordinate system between the attitude of the middle frame corresponding to the desired attitude and the attitude of the base corresponding to the measured attitude according to the attitude of the middle frame corresponding to the desired attitude, the attitude of the base corresponding to the measured attitude, and the angle offset value; determining a follow speed according to the angle difference, and integrating the follow speed to obtain a follow command. The transceiver unit 720 is used to send the follow command to the gimbal.

Optionally, in some embodiments, the current operation mode of the gimbal is the follow mode, and the processing unit 710 is further used for determining an angle offset value of the gimbal in the lock mode according to the attitude of the middle frame and the attitude of the base corresponding to the measured attitude of the gimbal; subtracting the angle generated by the speed integral command part of the gimbal in the follow mode and the angle generated by the push command part from the angle offset value to obtain the pure rotation of the base of the gimbal in the follow mode; and recording the angle of the pure rotation of the base.

Optionally, in some embodiments, the first operation mode is the lock mode or the follow mode of the gimbal, and the second operation mode is the recenter mode. The processing unit 710 is specifically used for determining a recenter speed according to the attitude of the base corresponding to the measured attitude and the attitude of the middle frame corresponding to the desired attitude; and integrating the recenter speed to get the speed integral command part, and clearing command parts other than the speed integral command part to zero.

Optionally, in some embodiments, the speed integral command part causes the difference between the yaw Euler angle of the attitude of the middle frame corresponding to the desired attitude and the yaw Euler angle of the attitude of the base corresponding to the desired attitude to be within a preset range.

As shown in FIG. 8, an embodiment of the present disclosure further provides a controller 800 that controls the gimbal. As shown in FIG. 8, the controller 800 includes a processor 810 and a memory 820. The memory 820 is configured to store computer programs and the processor 810 is configured to execute the computer programs to implement the following: determining that a gimbal needs to be switched from a first operation mode to a second operation mode; acquiring the measured attitude of the gimbal and determining the desired attitude of the gimbal according to the measured attitude; and controlling the gimbal to switch from the first operation mode to the second operation mode while maintaining the desired attitude.

As shown in FIG. 8, the controller 800 further includes a transceiver 830 for communicating with the gimbal. For example, the transceiver 830 receives the attitude information sent by the gimbal, so that the processor 810 obtains the measured attitude of the gimbal based on this. For another example, the transceiver 830 sends a control signal to the gimbal under the instruction of the processor 810 to control the gimbal to switch from the first operation mode to the second operation mode while maintaining the desired attitude.

Optionally, in some embodiments, the processor 810 is specifically used for determining that the gimbal needs to be switched from the first operation mode to the second operation mode according to the flight control data.

Optionally, in some embodiments, the processor 810 is specifically used for determining that the gimbal needs to be switched from the first operation mode to the second operation mode when the flight control data corresponds to the unmanned aerial vehicle stopping the propeller.

Optionally, in some embodiments, the processor 810 is specifically used for determining that the gimbal needs to be switched from the first operation mode to the second operation mode when the unmanned aerial vehicle stops transmitting flight control data.

Optionally, in some embodiments, the first operation mode is the lock mode of the gimbal, and the second operation mode is the follow mode of the gimbal. The processor 810 is specifically used for controlling the gimbal to be switched from the lock mode to the follow mode while maintaining the desired attitude and not performing recenter.

Optionally, in some embodiments, the processor 810 is specifically used for determining an angle offset value of the gimbal in the lock mode according to the attitude of the middle frame and the attitude of the base corresponding to the measured attitude of the gimbal; determining an angle difference in the Euler coordinate system between the attitude of the middle frame corresponding to the desired attitude and the attitude of the base corresponding to the measured attitude according to the attitude of the middle frame corresponding to the desired attitude, the attitude of the base corresponding to the measured attitude, and the angle offset value; determining a follow speed according to the angle difference, and integrating the follow speed to obtain a follow command. The transceiver 830 is used to send the follow command to the gimbal.

Optionally, in some embodiments, the processor 810 is specifically used for determining the angle offset of the gimbal in the lock mode according to the difference between the yaw Euler angle of the attitude of the middle frame and the yaw Euler angle of the attitude of the base corresponding to the measured attitude.

Optionally, in some embodiments, the processor 810 is specifically used for obtaining an angle offset value of the gimbal in the lock mode by adding the angle generated by the speed integral command part of the gimbal in the lock mode and the angle generated by the push command part to the angle of the pure rotation of the base; determining an angle difference in the Euler coordinate system between the attitude of the middle frame corresponding to the desired attitude and the attitude of the base corresponding to the measured attitude according to the attitude of the middle frame corresponding to the desired attitude, the attitude of the base corresponding to the measured attitude, and the angle offset value; determining a follow speed according to the angle difference, and integrating the follow speed to obtain a follow command. The transceiver 830 is used to send the follow command to the gimbal.

Optionally, in some embodiments, the current operation mode of the gimbal is the follow mode, and the processor 810 is further used for determining an angle offset value of the gimbal in the lock mode according to the attitude of the middle frame and the attitude of the base corresponding to the measured attitude of the gimbal; subtracting the angle generated by the speed integral command part of the gimbal in the follow mode and the angle generated by the push command part from the angle offset value to obtain the pure rotation of the base of the gimbal in the follow mode; and recording the angle of the pure rotation of the base.

Optionally, in some embodiments, the first operation mode is the lock mode or the follow mode of the gimbal, and the second operation mode is the recenter mode. The processor 810 is specifically used for determining a recenter speed according to the attitude of the base corresponding to the measured attitude and the attitude of the middle frame corresponding to the desired attitude; and integrating the recenter speed to get the speed integral command part, and clearing command parts other than the speed integral command part to zero.

Optionally, in some embodiments, the speed integral command part causes the difference between the yaw Euler angle of the attitude of the middle frame corresponding to the desired attitude and the yaw Euler angle of the attitude of the base corresponding to the desired attitude to be within a preset range.

As shown in FIG. 9, the embodiment of the present disclosure further provides an image stabilization device 900 including a gimbal 910, a measurement component 920, and a controller 930.

The gimbal 910 includes a first operation mode and a second operation mode. The current operation mode of the gimbal 910 is the first operation mode.

The measurement component 920 is configured to acquire a measured attitude of the gimbal, and send the measured attitude to the controller 930.

The controller 930 is configured to determine that the gimbal 910 needs to be switched from a first operation mode to a second operation mode, acquire the measured attitude from the measurement component 920 and determine the desired attitude of the gimbal 910, and control the gimbal 910 to switch from the first operation mode to the second operation mode while maintaining the desired attitude.

Optionally, in some embodiments, the controller 930 is specifically used for determining that the gimbal needs to be switched from the first operation mode to the second operation mode according to the flight control data.

Optionally, in some embodiments, the controller 930 is specifically used for determining that the gimbal needs to be switched from the first operation mode to the second operation mode when the flight control data corresponds to the unmanned aerial vehicle stopping the propeller.

Optionally, in some embodiments, the controller 930 is specifically used for determining that the gimbal needs to be switched from the first operation mode to the second operation mode when the unmanned aerial vehicle stops transmitting flight control data.

Optionally, in some embodiments, the first operation mode is the lock mode of the gimbal, and the second operation mode is the follow mode of the gimbal. The controller 930 is specifically used for controlling the gimbal to be switched from the lock mode to the follow mode while maintaining the desired attitude and not performing recenter.

Optionally, in some embodiments, the controller 930 is specifically used for controlling the gimbal to be switched from the lock mode to the follow mode while maintaining the desired attitude and not performing recenter in the following way: determining an angle offset value of the gimbal in the lock mode according to the attitude of the middle frame and the attitude of the base corresponding to the measured attitude of the gimbal; determining an angle difference in the Euler coordinate system between the attitude of the middle frame corresponding to the desired attitude and the attitude of the base corresponding to the measured attitude according to the attitude of the middle frame corresponding to the desired attitude, the attitude of the base corresponding to the measured attitude, and the angle offset value; determining a follow speed according to the angle difference, and integrating the follow speed to obtain a follow command.

Optionally, in some embodiments, the controller 930 is specifically used for determining the angle offset of the gimbal in the lock mode according to the difference between the yaw Euler angle of the attitude of the middle frame and the yaw Euler angle of the attitude of the base corresponding to the measured attitude.

Optionally, in some embodiments, the controller 930 is specifically used for controlling the gimbal to be switched from the lock mode to the follow mode while maintaining the desired attitude and not performing recenter in the following way: obtaining an angle offset value of the gimbal in the lock mode by adding the angle generated by the speed integral command part of the gimbal in the lock mode and the angle generated by the push command part to the angle of the pure rotation of the base; determining an angle difference in the Euler coordinate system between the attitude of the middle frame corresponding to the desired attitude and the attitude of the base corresponding to the measured attitude according to the attitude of the middle frame corresponding to the desired attitude, the attitude of the base corresponding to the measured attitude, and the angle offset value; determining a follow speed according to the angle difference, and integrating the follow speed to obtain a follow command.

Optionally, in some embodiments, the first operation mode of the gimbal is the follow mode, and the controller 930 is further used for determining an angle offset value of the gimbal in the lock mode according to the attitude of the middle frame and the attitude of the base corresponding to the measured attitude of the gimbal; subtracting the angle generated by the speed integral command part of the gimbal in the follow mode and the angle generated by the push command part from the angle offset value to obtain the pure rotation of the base of the gimbal in the follow mode; and recording the angle of the pure rotation of the base.

Optionally, in some embodiments, the first operation mode is the lock mode or the follow mode of the gimbal, and the second operation mode is the recenter mode.

The controller 930 is specifically used for controlling the gimbal to be switched from the lock mode to the follow mode while maintaining the desired attitude and not performing recenter in the following way: determining a recenter speed according to the attitude of the base corresponding to the measured attitude and the attitude of the middle frame corresponding to the desired attitude; and integrating the recenter speed to get the speed integral command part, and clearing command parts other than the speed integral command part to zero.

Optionally, in some embodiments, the speed integral command part causes the difference between the yaw Euler angle of the attitude of the middle frame corresponding to the desired attitude and the yaw Euler angle of the attitude of the base corresponding to the desired attitude to be within a preset range.

In this embodiment, it should be understood that the controller 930 may correspond to the controller 700 or the controller 800 provided in the device embodiment mentioned above.

It should be understood that the processor in the embodiments of the present disclosure may be a central processing unit (CPU), or other general-purpose processor, a digital signal processor (DSP), an application specific integrated circuit (ASIC), a field programmable gate array (FPGA), or other programmable logic device, discrete gate or transistor logic device, and discrete hardware components, etc. The general-purpose processor may be a microprocessor or any conventional processor, etc.

It should also be understood that the memory in the embodiments of the present disclosure may be a volatile memory or a non-volatile memory, or may include both of the volatile memory and the non-volatile memory. The non-volatile memory may be a read-only memory (ROM), a programmable read-only memory (PROM), an erasable programmable read-only memory (EPROM), an electrically erasable programmable read-only memory (EEPROM) or a flash memory. The volatile memory can be a random-access memory (RAM) used as an external cache. By way of example, but not limiting, the RAM can include many forms e.g., a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM), and a direct rambus random access memory (DRRAM).

It should be noted that when the processor is a general-purpose processor, DSP, ASIC, FPGA or other programmable logic device, discrete gate or transistor logic device, discrete hardware component, the memory (memory module) is integrated in the processor.

It should be noted that the memories in this specification are intended to include but are not limited to these and any other suitable types of memory.

An embodiment of the present disclosure further provides a computer-readable storage medium storing instructions. When the instructions are run on the computer, the computer is enabled to execute the methods of the above method embodiments.

An embodiment of the present disclosure further provides a computing device including the computer-readable storage medium described above.

The embodiments of the present disclosure can be applied to an aircraft, especially in the field of unmanned aerial vehicle.

In some embodiments, it may be implemented in whole or in part by software, hardware, firmware, or any combination thereof. When implemented in software, it may be implemented in whole or in part in the form of a computer program product including one or more computer instructions. When computer instructions are loaded and executed on a computer, all or part of the processes or functions according to the embodiments of the present disclosure are generated. The computer may be a general-purpose computer, a special purpose computer, a computer network, or other programmable device. Computer instructions may be stored in a computer-readable storage medium or transmitted from one computer-readable storage medium to another computer-readable storage medium. For example, computer instructions can be transmitted from a website, a computer, a server, or a data center to another website, computer, server, or data center through wired (e.g., coaxial cable, optical fiber, digital subscriber line (i.e., DSL)) or wireless (e.g., infrared, wireless, microwave, etc.). A computer-readable storage medium may be any usable media that can be stored and read by a computer or a data storage device such as a server or a data center etc. containing one or more usable media integrations. An usable media can be a magnetic media (e.g., floppy disk, hard disk, magnetic tape), an optical media (e.g., high-density digital video disc, i.e., DVD), or a semiconductor media (e.g., solid state disk, i.e., SSD), etc.

It should be understood that each embodiment of the present disclosure is described by taking a total bit width of 16 bits as an example, and may be applicable to other bit widths.

It should be understood that the terms of "an embodiment" or "one embodiment" mentioned throughout the specification indicates a particular feature, structure, or characteristic related to the embodiment is included in at least one embodiment of the present disclosure. Therefore, the terms of "in an embodiment" or "in one embodiment" appearing throughout the specification are not necessarily referring to the same embodiment. Furthermore, the particular feature, structure, or characteristic may be combined in any suitable manner in one or more embodiments.

It should be understood that, in various embodiments of the present disclosure, the values of the serial numbers of the processes do not indicate the order of execution. The execution order of each process is determined by its function and internal logic, and does not constitute any limitation on the implementation process of the embodiments of the present disclosure.

It should be understood that in the embodiment of the present disclosure, "B corresponding to A" indicates that B is associated with A, and B can be determined according to A. It should also be understood that determining B according to A does not mean determining B based only on A, but also determining B based on A and/or other information.

The term "and/or" used herein is merely an association relationship describing associated objects, indicating that there can be three relationships. For example, A and/or B can indicate, A alone, A and B, and B alone. The character "/" generally indicates that the related objects before and after are an "or" relationship.

Those skilled in the art can realize that the units and algorithm steps of each example described in connection with the embodiments disclosed herein can be implemented by electronic hardware, or a combination of computer software and electronic hardware. Whether these functions are implemented by hardware or software depends on the specific application and design constraints of the technical solution. Professionals can use different methods to implement the described functions for each specific application, but such implementation should not be considered beyond the scope of this specification.

Those skilled in the art can clearly understand that, for the convenience and brevity of the description, the specific operating processes of the systems, devices, and units described above can refer to the corresponding processes in the foregoing method embodiments, and are not repeated here.

The disclosed systems, apparatuses, and methods may be implemented in other manners not described here. For example, the devices described above are merely illustrative. For example, the division of units may only be a logical function division, and there may be other ways of dividing the units. For example, multiple units or components may be combined or may be integrated into another system, or some features may be ignored, or not executed. Further, the coupling or direct coupling or communication connection shown or discussed may include a direct connection or an indirect connection or communication connection through one or more interfaces, devices, or units, which may be electrical, mechanical, or in other form.

The units described as separate components may or may not be physically separate, and a component shown as a unit may or may not be a physical unit. That is, the units may be located in one place or may be distributed over a plurality of network elements. Some or all of the components may be selected according to the actual needs to achieve the object of the present disclosure.

In addition, the functional units in the various embodiments of the present disclosure may be integrated in one processing unit, or each unit may be an individual physically unit, or two or more units may be integrated in one unit.

The present disclosure has been described with the above embodiments, but the technical scope of the present disclosure is not limited to the scope described in the above embodiments. Other embodiments of the disclosure will be apparent to those skilled in the art from consideration of the specification and practice of the embodiments disclosed herein. It is intended that the specification and examples be considered as example only and not to limit the scope of the disclosure, with a true scope and spirit of the invention being indicated by the claims.

## Claims

1. An operation mode switching method for a gimbal comprising:
determining that the gimbal needs to be switched from a first operation mode to a second operation mode;
acquiring a measured attitude of the gimbal and determining a desired attitude of the gimbal according to the measured attitude; and
controlling the gimbal to switch from the first operation mode to the second operation mode while maintaining the desired attitude.

2. The method of claim 1, wherein determining that the gimbal needs to be switched from the first operation mode to the second operation mode includes determining that the gimbal needs to be switched from the first operation mode to the second operation mode according to flight control data.

3. The method of claim 2, wherein determining that the gimbal needs to be switched from the first operation mode to the second operation mode according to the flight control data includes determining that the gimbal needs to be switched from the first operation mode to the second operation mode in response to the flight control data corresponding to an unmanned aerial vehicle stopping a propeller.

4. The method of claim 2, wherein determining that the gimbal needs to be switched from the first operation mode to the second operation mode according to the flight control data includes determining that the gimbal needs to be switched from the first operation mode to the second operation mode in response to an unmanned aerial vehicle stopping transmitting the flight control data.

5. The method of any of claims 1-4, wherein:
the first operation mode is a lock mode of the gimbal, and the second operation mode is a follow mode of the gimbal;
controlling the gimbal to switch from the first operation mode to the second operation mode while maintaining the desired attitude includes controlling the gimbal to switch from the lock mode to the follow mode while maintaining the desired attitude and not performing recenter.

6. The method of claim 5, wherein controlling the gimbal to switch from the lock mode to the follow mode while maintaining the desired attitude and not performing recenter includes:
determining an angle offset value of the gimbal in the lock mode according to an attitude of a middle frame corresponding to the measured attitude and an attitude of a base corresponding to the measured attitude;
determining an angle difference in the Euler coordinate system between an attitude of the middle frame corresponding to the desired attitude and the attitude of the base corresponding to the measured attitude according to the attitude of the middle frame corresponding to the desired attitude, the attitude of the base corresponding to the measured attitude, and the angle offset value;
determining a follow speed according to the angle difference, and integrating the follow speed to obtain a follow command.

7. The method of claim 6, wherein determining the angle offset value of the gimbal in the lock mode according to the attitude of the middle frame corresponding to the measured attitude and the attitude of the base corresponding to the measured attitude includes:
determining the angle offset value of the gimbal in the lock mode according to a difference between a yaw Euler angle of the attitude of the middle frame corresponding to the measured attitude and a yaw Euler angle of the attitude of the base corresponding to the measured attitude.

8. The method of claim 5, wherein controlling the gimbal to switch from the lock mode to the follow mode while maintaining the desired attitude and not performing recenter includes:
obtaining an angle offset value of the gimbal in the lock mode by adding angles of the gimbal in the lock mode generated by a speed integral command part and a push command part, respectively, to an angle of a pure rotation of the base;
determining an angle difference in the Euler coordinate system between an attitude of the middle frame corresponding to the desired attitude and an attitude of the base corresponding to the measured attitude according to the attitude of the middle frame corresponding to the desired attitude, the attitude of the base corresponding to the measured attitude, and the angle offset value;
determining a follow speed according to the angle difference, and integrating the follow speed to obtain a follow command.

9. The method of any of claims 5-8, wherein a current operation mode of the gimbal is the follow mode and the method further includes:
determining an angle offset value of the gimbal in the lock mode according to an attitude of a middle frame corresponding to the measured attitude and an attitude of a base corresponding to the measured attitude;
subtracting angles of the gimbal in the follow mode generated by a speed integral command part and a push command part, respectively, from the angle offset value to obtain an angle of a pure rotation of the base of the gimbal in the follow mode; and
recording the angle of the pure rotation of the base.

10. The method of any of claims 1-4, wherein:
the first operation mode is a lock mode or a follow mode of the gimbal and the second operation mode is a recenter mode;
controlling the gimbal to switch from the first operation mode to the second operation mode while maintaining the desired attitude includes determining a recenter speed according to an attitude of a base corresponding to the measured attitude and an attitude of a middle frame corresponding to the desired attitude, integrating the recenter speed to obtain a speed integral command part, and clearing command parts other than the speed integral command part to zero.

11. The method of claim 10, wherein the speed integral command part causes a difference between a yaw Euler angle of the attitude of the middle frame corresponding to the desired attitude and a yaw Euler angle of an attitude of the base corresponding to the desired attitude to be within a preset range.

12. A controller, comprising a processor and a memory, the memory storing a computer program, the processor being configured to execute the computer program to perform operations including:
determining that a gimbal needs to be switched from a first operation mode to a second operation mode;
acquiring a measured attitude of the gimbal and determining a desired attitude of the gimbal according to the measured attitude; and
controlling the gimbal to switch from the first operation mode to the second operation mode while maintaining the desired attitude.

13. The controller of claim 12, wherein the processor is specifically used for determining that the gimbal needs to be switched from the first operation mode to the second operation mode according to flight control data.

14. The controller of claim 13, wherein the processor is specifically used for determining that the gimbal needs to be switched from the first operation mode to the second operation mode in response to the flight control data corresponding to an unmanned aerial vehicle stopping a propeller.

15. The controller of claim 13, wherein the processor is specifically used for determining that the gimbal needs to be switched from the first operation mode to the second operation mode in response to an unmanned aerial vehicle stopping transmitting the flight control data.

16. The controller of any of claims 12-15, wherein the first operation mode is a lock mode of the gimbal and the second operation mode is a follow mode of the gimbal, and the processor is specifically used for controlling the gimbal to switch from the lock mode to the follow mode while maintaining the desired attitude and not performing recenter.

17. The controller of claim 16, wherein the processor is specifically used for controlling the gimbal to switch from the lock mode to the follow mode while maintaining the desired attitude and not performing recenter through the following:
determining an angle offset value of the gimbal in the lock mode according to an attitude of a middle frame corresponding to the measured attitude and an attitude of a base corresponding to the measured attitude of the gimbal;
determining an angle difference in the Euler coordinate system between an attitude of the middle frame corresponding to the desired attitude and the attitude of the base corresponding to the measured attitude according to the attitude of the middle frame corresponding to the desired attitude, the attitude of the base corresponding to the measured attitude, and the angle offset value;
determining a follow speed according to the angle difference, and integrating the follow speed to obtain a follow command.

18. The controller of claim 17, wherein the processor is specifically used for determining the angle offset value of the gimbal in the lock mode according to a difference between a yaw Euler angle of the attitude of the middle frame corresponding to the measured attitude and a yaw Euler angle of the attitude of the base corresponding to the measured attitude.

19. The controller of claim 16, wherein the processor is specifically used for controlling the gimbal to switch from the lock mode to the follow mode while maintaining the desired attitude and not performing recenter through the following:
obtaining an angle offset value of the gimbal in the lock mode by adding angles of the gimbal in the lock mode generated by a speed integral command part and a push command part, respectively, to an angle of a pure rotation of the base;
determining an angle difference in the Euler coordinate system between an attitude of the middle frame corresponding to the desired attitude and an attitude of the base corresponding to the measured attitude according to the attitude of the middle frame corresponding to the desired attitude, the attitude of the base corresponding to the measured attitude, and the angle offset value;
determining a follow speed according to the angle difference, and integrating the follow speed to obtain a follow command.

20. The controller of any of claims 16-19, wherein a current operation mode of the gimbal is the follow mode, and the processor is further used for:
determining an angle offset value of the gimbal in the lock mode according to an attitude of a middle frame corresponding to the measured attitude and an attitude of a base corresponding to the measured attitude;
subtracting angles of the gimbal in the follow mode generated by a speed integral command part and a push command part, respectively, from the angle offset value to obtain an angle of a pure rotation of the base of the gimbal in the follow mode; and
recording the angle of the pure rotation of the base.

21. The controller of any of claims 12-15, wherein the first operation mode is a lock mode or a follow mode of the gimbal and the second operation mode is a recenter mode, and the processor is specifically used for controlling the gimbal to switch from the first operation mode to the second operation mode while maintaining the desired attitude through the following:
determining a recenter speed according to an attitude of a base corresponding to the measured attitude and an attitude of a middle frame corresponding to the desired attitude; and
integrating the recenter speed to obtain a speed integral command part, and clearing command parts other than the speed integral command part to zero.

22. The controller of claim 21, wherein the speed integral command part causes a difference between a yaw Euler angle of the attitude of the middle frame corresponding to the desired attitude and a yaw Euler angle of an attitude of the base corresponding to the desired attitude to be within a preset range.

23. An image stabilization device, comprising:
a gimbal having a first operation mode and a second operation mode, a current operation mode of the gimbal is the first operation mode;
a measurement component configured to acquire a measured attitude of the gimbal, and send the measured attitude to a controller;
the controller configured to determine that the gimbal needs to be switched from the first operation mode to the second operation mode, acquire the measured attitude from the measurement component and determine a desired attitude of the gimbal, and control the gimbal to switch from the first operation mode to the second operation mode while maintaining the desired attitude.

24. The device of claim 23, wherein the controller is specifically used for determining that the gimbal needs to be switched from the first operation mode to the second operation mode according to flight control data.

25. The device of claims 24, wherein the controller is specifically used for determining that the gimbal needs to be switched from the first operation mode to the second operation mode in response to the flight control data corresponding to an unmanned aerial vehicle stopping a propeller.

26. The device of claim 24, wherein the controller is specifically used for determining that the gimbal needs to be switched from the first operation mode to the second operation mode in response to an unmanned aerial vehicle stopping transmitting the flight control data.

27. The device of any of claims 23-26, wherein:
the first operation mode is a lock mode of the gimbal and the second operation mode is a follow mode of the gimbal; and
the controller is specifically used for controlling the gimbal to switch from the lock mode to the follow mode while maintaining the desired attitude and not performing recenter.

28. The device of claim 27, wherein the controller is specifically used for controlling the gimbal to be switched from the lock mode to the follow mode while maintaining the desired attitude and not performing recenter through the following:
determining an angle offset value of the gimbal in the lock mode according to an attitude of a middle frame corresponding to the measured attitude and an attitude of a base corresponding to the measured attitude of the gimbal;
determining an angle difference in the Euler coordinate system between an attitude of the middle frame corresponding to the desired attitude and the attitude of the base corresponding to the measured attitude according to the attitude of the middle frame corresponding to the desired attitude, the attitude of the base corresponding to the measured attitude, and the angle offset value;
determining a follow speed according to the angle difference, and integrating the follow speed to obtain a follow command.

29. The device of claim 28, wherein the controller is specifically used for determining the angle offset of the gimbal in the lock mode according to a difference between a yaw Euler angle of the attitude of the middle frame corresponding to the measured attitude and a yaw Euler angle of the attitude of the base corresponding to the measured attitude.

30. The device of claim 27, wherein the controller is specifically used for controlling the gimbal to be switched from the lock mode to the follow mode while maintaining the desired attitude and not performing recenter through the following:
obtaining an angle offset value of the gimbal in the lock mode by adding angles of the gimbal in the lock mode generated by a speed integral command part and a push command part, respectively, to an angle of a pure rotation of the base;
determining an angle difference in the Euler coordinate system between an attitude of the middle frame corresponding to the desired attitude and an attitude of the base corresponding to the measured attitude according to the attitude of the middle frame corresponding to the desired attitude, the attitude of the base corresponding to the measured attitude, and the angle offset value;
determining a follow speed according to the angle difference, and integrating the follow speed to obtain a follow command.

31. The device of any of claims 27-30, wherein the first operation mode of the gimbal is the follow mode, and the controller is further used for:
determining an angle offset value of the gimbal in the lock mode according to an attitude of a middle frame corresponding to the measured attitude and an attitude of a base corresponding to the measured attitude;
subtracting angles of the gimbal in the follow mode generated by a speed integral command part and a push command part, respectively, from the angle offset value to obtain an angle of a pure rotation of the base of the gimbal in the follow mode; and
recording the angle of the pure rotation of the base.

32. The device of any of claims 23-26, wherein:
the first operation mode is a lock mode or a follow mode of the gimbal, and the second operation mode is a recenter mode; and
the controller is specifically used for controlling the gimbal to switch from the lock mode to the follow mode while maintaining the desired attitude and not performing recenter through the following:
determining a recenter speed according to an attitude of a base corresponding to the measured attitude and an attitude of a middle frame corresponding to the desired attitude; and
integrating the recenter speed to obtain a speed integral command part, and clearing command parts other than the speed integral command part to zero.

33. The device of claim 32, wherein the speed integral command part causes a difference between a yaw Euler angle of the attitude of the middle frame corresponding to the desired attitude and a yaw Euler angle of an attitude of the base corresponding to the desired attitude to be within a preset range.

34. A computer-readable storage medium storing computer programs and when the computer programs are run on a computer, the computer is enabled to execute the method of any of claims 1-11.

35. A computer program product containing instructions and when the instructions are run on a computer, the computer is enabled to execute the method of any of claims 1-11.
